# EUROPEAN PATENT APPLICATION

(11) **EP 3 173 512 A1**
(43) Date of publication of application: **31.05.2017**
(21) Application number: 14766511.1
(22) Date of filing: 23.07.2014
(51) Int. Cl.: D04B 21/12, B29D 28/00, D03D 1/04

(54) **WOVEN OR EXTRUDED NET, USE OF THE NET FOR MAKING A BAG AND BAG FOR CONTAINING PRODUCTS**

(71) Applicant: GIRNET INTERNACIONAL, S.L., 08911 Badalona (ES)
(72) Inventor: GIRO AMIGO, Ezequiel, E-08911 Badalona (Barcelona) (ES)
(74) Representative: Sugrañes Patentes y Marcas
(86) International application number: PCT/ES2014/070591
(87) International publication number: WO 2016/012633

(57) **Abstract**

The invention relates to a woven or extruded net (1) for forming bags (10), with threads or bands which are linked or firmly bonded together to make up meshes (2, 3). The meshes of the net are not homogeneous and the net comprises at least one main portion in which the threads or bands are linked or bonded to form a first mesh structure (4), suitable for said net to fulfill its role; and at least one smaller portion wherein the threads or bands form a second mesh structure (5), more readily breakable than the first mesh structure, indeed intended to make it easier to open the bag which is to be made with the net.

## Description

### Technical field of the invention

The present invention relates to a woven or extruded net for forming bags, with threads or bands which are linked or firmly bonded together to make up meshes. Furthermore, the invention also relates to the use of said net to form a bag for packing food products and a bag formed with the net.

### Background of the invention

Bags made from a woven or extruded net for packing, for example, horticultural products are widely known. This kind of bags allow the products to be in contact with the environment through meshes shaped by linking or bonding between the threads or bands making up the net.

The density of the net, i.e. the mesh size, as well as the dimension and nature of the threads or bands is chosen depending of the tensile stress to which the net will be subjected over the life of the bag. However, there are bags combining a net with thermoplastic strips that work together in order to ensure that the bag resists a certain load weight.

In any case, the mesh is homogeneous so that its mechanical properties are not altered at different points of the net.

When the bags combine a net with thermoplastic strips, these are sometimes used to provide the bag with opening means. This is the case, for example, of the bag described in the patent document EP 1388502, obtained from a weldable netting, the bag having a closed upper end comprising two mutually welded outer films superimposed onto the mutually facing front and rear walls of the bag, said walls and layers having a cut made in them, originating at an edge of said end, which provides the bag with means to start a tear and opening thereof.

Another example is the bag described in the patent document ES 2214142, combining plastic sectors with net sectors fixed to each other by heat-welding lines in order to form a laminar body which is later closed over itself to form a tubular body. In order to close it, a polyethylene resin bead is used, determining a stable closure for the bag which, however, allows for subsequent opening with a minimum effort.

A first object of the present invention is an alternative to the bags described, specifically an alternative in order to provide a bag made from a net comprising means for opening thereof.

In the examples described, it is necessary to combine the net with other elements such as films or plastic strips to provide the bags with opening means.

Another object of the invention is a solution to provide the bags with opening means without the need of having to incorporate or use to that end auxiliary components or elements such as plastic strips.

It is also desirable for neither the bag nor the net to need to be expressly subjected or handled during the manufacture of the bag to provide it with opening means, which could increase the manufacturing cost of the bags or give rise to manufacturing errors or to defective bags.

### Explanation of the invention

In order to provide a solution accomplishing the outlined objectives, a woven or extruded net for forming bags is disclosed, with threads or bands which are linked or firmly bonded together to make up meshes.

It should be noted that in the present text, a mesh is understood as each one of the polygons or geometric shapes, formed by threads or bands that are crossed, bonded or tied together at their vertices. Thus, meshes would be the cells forming by the crosslinking of threads or bands linked or bonded together and which form the net. For example, in an extruded net, the meshes correspond to the rhombuses formed by the threads or bands linked to each other.

Essentially, the net is characterized in that the meshes of the net are not homogeneous, the net at least comprising a main portion wherein the threads or bands are linked or bonded to form a first mesh structure, suitable so that the net fulfills its role; and at least one smaller portion wherein the threads or bands form a second mesh structure, more readily breakable than the first mesh structure, indeed intended to make it easier to open the bag which is to be made with the net.

The net itself advantageously incorporates the opening means thereof created during the manufacture of the net, and therefore, it is not necessary to add any additional elements to configure opening means.

In accordance with a first embodiment of the invention, at least one of the threads or bands forming the second mesh structure has a lower tensile strength than the threads or bands forming the first mesh structure.

According to another characteristic of the first embodiment, at least one of the threads or bands forming the second mesh structure is made of a different material than that of the threads or bands forming the first mesh structure. Alternatively, the threads or bands forming the second mesh structure are made of the same material as those forming the first mesh structure, although at least one of the threads forming the second mesh structure is thinner or has a smaller cross-section.

In accordance with a second embodiment of the invention, the linking or bonding between the threads or bands of the meshes of the second mesh structure is different than the linking or bonding of the meshes of the first mesh structure. In particular, the different linking or bonding is based on the fact that the second mesh structure has a mesh size or cell size that is greater than that of the first mesh structure. The greater mesh size also facilitates inserting a fingertip and ripping the net, thus breaking the meshes of the second mesh structure.

According to a third embodiment of the invention, the meshes of the second structure are made up by fewer threads or bands than the meshes of the first structure. This happens, for example, when the net is a woven mesh wherein there are links that are formed by threading two or more threads through a needle, in which in order to make the portion, or smaller portions, in which the threads or bands form the second mesh structure, instead of threading two or more threads for the links, only one thread or a fewer threads are threaded than in the meshes of the first structure.

In accordance with another characteristic of the invention, regardless of the embodiment, the smaller portion (or each one of the smaller portions if there are more than one), in which the threads or bands are linked or bonded in accordance with the second mesh structure, extends out in the net in a respective direction. Thus, the meshes of the smaller portions that follow a second mesh structure are contiguous meshes defining a specific weakening direction of the net along with it is easy to break it.

In accordance with another characteristic of the invention, the net may comprise at least two smaller portions in which the threads or bands are linked or bonded according to the second mesh structure. Preferably, the two smaller portions extend out in the net in directions parallel each other, the two smaller portions being separated by main portions whose threads or bands are linked or bonded according to the first mesh structure.

According to another characteristic of the invention, the meshes of the second mesh structure are advantageously visually distinguishable from the meshes of the first mesh structure. Said distinction may be because at least one of the threads or bands making up the meshes of the second structure has a different color than that of the threads or bands making up the meshes of the first structure. It is also possible that not only some threads but all the meshes of the second structure have a different color than that of the meshes of the first structure.

In accordance with another embodiment of the invention, the net comprises at least two smaller portions wherein the threads or bands form an equal number mesh structures, both of them being more easily breakable than the first mesh structure but the two smaller portions being different from each other. In this way, each smaller portion may be easily breakable due to a different reason, for example, because the threads in one of the smaller portions are made of a different material, whereas the other smaller portion may be easily breakable because the threads or bands have a smaller cross-section.

According to another characteristic of the net object of the invention, the tensile strength of the meshes of the second mesh structure is at least 20 % lower than the tensile strength of the meshes of the first mesh structure, and preferably is at least 30 % lower.

According to another characteristic of the invention, compatible with any of the embodiments described, the net is a tubular net. Alternatively, the net may be flat.

In accordance with a second aspect of the invention, the use of a net like the one described above to form a bag for packing food products is disclosed.

In accordance with a third aspect of the invention, a bag for packing food products formed with a net like the one described above is disclosed.

According to another characteristic of the bag object of the invention, in the bag there is a distinct upper end by which the bag is intended to be gripped, and an opposing lower end, and the at least one smaller portion in which the threads or bands form a second mesh structure extends longitudinally following the direction that runs from the upper end to the lower end.

### Brief description of the drawings

In the accompanying drawings is illustrated, by way of non-limiting example, a preferred embodiment of the bag object of the invention, as well as several embodiments of the net object of the invention for forming a bag. A machine for carrying out a tensile test of the net object of the invention is also schematically illustrated. In said drawings:
Fig. 1 is a perspective view of a preferred embodiment of a bag object of the invention, depicted as containing food products inside;
Fig. 2 is a perspective view of the bag from Fig. 1 provided with a label on its upper end;
Fig. 3 is a detailed view of a section of a net object of the invention according to one embodiment in which one of the threads or bands of the second mesh structure is made of a different material than that of the threads or bands of the first mesh structure;
Fig. 4 is a detailed view of a section of a net object of the invention according to another embodiment, similar to that of Fig. 3 but different in that all the threads or bands of the second mesh structure are made of a different material than that of the threads or bands of the first mesh structure;
Fig. 5 is a schematic view of a section of a net object of the invention according to another embodiment, specifically an extruded net with two smaller portions of second mesh structure, each one extending in a direction such that they cross at one point, at which one of the threads or bands of each smaller portion in thinner than the rest of threads or bands of the second structure and of the first structure;
Fig. 6 is a schematic view of a section of a net object of the invention according to another embodiment, specifically an extruded net similar to that of Fig. 5 but different in that in this case, the second mesh structure of each smaller portion has a larger mesh size than the first mesh structure of the main portions;
Fig. 7 is a schematic view of a section of a net object of the invention according to another embodiment, specifically an extruded net having essentially square mesh with a smaller portion extending in a horizontal direction, and whose second mesh structure has a larger mesh size, with an essentially rectangular shape, than that of the first mesh structure of the adjacent main portions;
Fig. 8 is a schematic view of a section of a net object of the invention according to another embodiment, specifically of an extruded net made with diagonal and vertical threads or bands in which in the smaller portion the bonding between the threads or bands of the meshes of the second mesh structure is different than the bonding of the meshes of the first structure of the main portions;
Fig. 9 is a schematic view of a section of a net object of the invention according to another embodiment, specifically a woven net with rhombus-shaped linking, in which the threads or bands of the second mesh structure have a smaller cross-section than the ones forming the first mesh structure; and
Fig. 10 is a schematic view of a section of a net object of the invention according to another embodiment, specifically a woven net in which the linking between the threads the meshes of the second mesh structure is different than the ones of the first mesh structure since only one thread is threaded through each needle instead of the two threads used for each needle used to form the first structure;
Fig. 11 is a schematic view of a section of a net object of the invention according to another embodiment, in which the meshes of the second mesh structure are made up by fewer threads or bands than the meshes of the first structure;
Fig. 12 is a schematic view of the tensile test of a net like the one in Fig. 9; and
Fig. 13 is a schematic view of the machine used to carry out the tensile test of Fig. 12.

### Detailed description of the drawings.

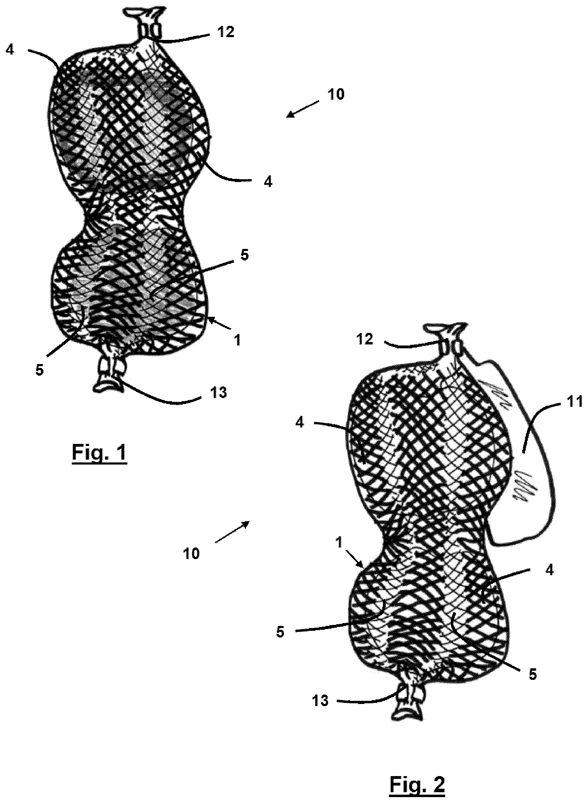

In Figs. 1 and 2, a tubular bag 10 formed with a net 1 closed off at its ends, which define an upper end 12 and a lower end 13 in the bag 10, is displayed. The bag 10 has been depicted in the figures as a bag 10 for packing food products, specifically horticultural products such as mandarins, lemons, garlic, etc., although it is suitable for packing different types of products provided that they are compatible with the nature thereof (non-sharp products so as not to interfere with the integrity of the net 1).

In Fig. 2, the upper end 12 of the bag 10 is provided with a label 11 which may have information printed on it about the packed product or company placing it on the market. The label 11 may at the same time be used by the user as a gripping means in order to lift or transport the bag 10.

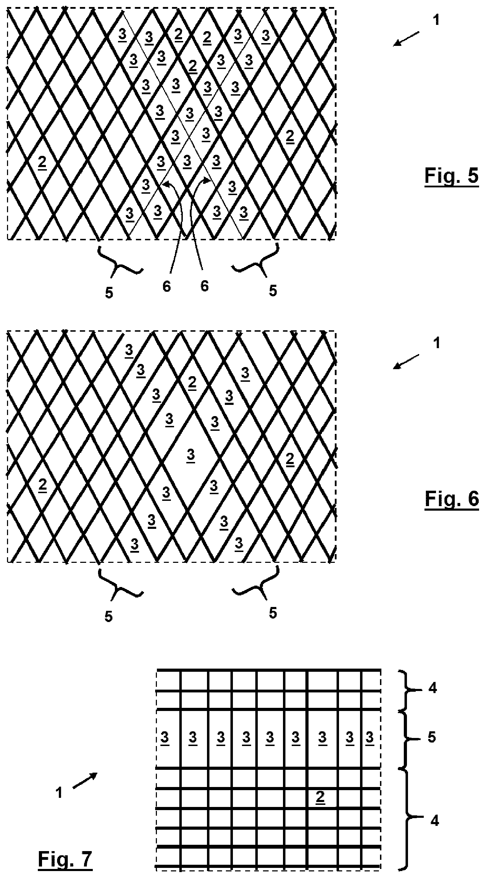

The net 1 forming the bag 10 is a woven net 1 or an extruded net, with threads or bands which are linked or firmly bonded together to make up meshes 2, 3. These meshes 2, 3 are each one of the polygons or geometric shapes, formed by threads or bands that are crossed, bonded or tied together at their vertices. Thus, in the present text, reference to the meshes should be understood as each one of these polygons or cells formed by the crosslinking of threads or bands linked or bonded to each other and which form the net 1. For example, in an extruded net 1 like the one in Figs. 5 and 6, the meshes 2, 3 correspond to the rhombuses formed by the threads or bands bonded together. The meshes 2, 3 allow the products contained in the bags 10 to be in contact with the external environment.

In the bags 10, the net 1 of which they are made has non-homogeneous meshes, since the net 1 comprises at least one main portion in which the threads or bands are linked or bonded to form a first mesh structure 4, suitable for said net to fulfill its role (product packing and the guarantee of supporting the weight thereof) and at least one smaller portion in which the threads or bands form a second mesh structure 5, which is more readily breakable than the first mesh structure 4, indeed being intended to make it easier to open the bag 10 to be made with the net. Specifically, in the bags 10 depicted in Figs. 1 and 2, two smaller portions may be observed, extending parallel to each other from the upper end 12 to the lower end 13, and two main portions separating the former (it is understood that the net 1 part of the bag 10, on the side opposite the one shown in the figures, corresponds to a main portion, though according to other variants the rear side may also comprise one or more smaller portions). The second mesh structure 5 is such that it itself makes it possible for the user of the bag 10 to easily open it in order to extract the packed products.

Advantageously, and as may be observed in Figs. 1 and 2, the smaller portions of the net 1, which have the second mesh structure 5, may be visually distinguished from the main portions forming the rest of the net 1 of the bag 10, which clearly indicates to the user where they should break the net 1 for easy opening. This visual distinction may be because at least one of the threads or bands of the second mesh structure 5 has a different color than the color of the threads or bands of the first mesh structure 4, or may also be because not only one of the threads, but all the meshes of the second mesh structure 5 have a different color than the meshes of the first mesh structure 4.

What follows is a description of various embodiments of the net 1 such that it comprises at least one smaller portion formed according to a second mesh structure 5 which is more easily breakable than the main portions of the rest of the net 1 shaped according to a first mesh structure 4.

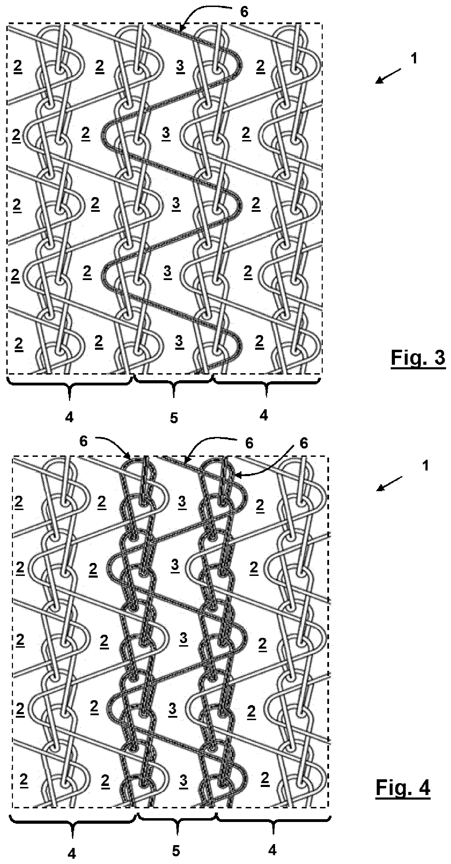

Fig. 3 depicts a portion of a net 1 in which a secondary portion flanked laterally by respective main portions is observed. In the secondary portion shown, the threads linked together form meshes 3 according to a second mesh structure 5, specifically, the meshes 3 have a triangular shape, since the thread 6 is linked in a zigzag between two others. Indeed, this thread 6 which is part of the threads or bands forming the second mesh structure 5 has a lower tensile strength than the threads or bands forming the first mesh structure 4 of the main sections. The different tensile strength is due to the fact that the thread 6 is made of a different material than the threads forming the first mesh structure 4.

The difference between the tensile strength of the first mesh structure 4 and the second mesh structure 5 is at least 30 %. By way of example, while the threads or bands forming the first mesh structure 4 are made of polyethylene, at least one of the threads forming the second mesh structure 5, the thread 6 in Fig. 3, is made of polyester, polyamide or cotton. The user, guided by the different color of the thread 6, may rip the zigzag formed by the thread 6, easily breaking it either by simply inserting their finger through one of the meshes 3 and sliding it along the vertical direction, or by pulling the thread 6 outwards until it breaks. Once the thread 6 of Fig. 3 breaks, the two vertical threads between which it was linked will be detached from each other and a vertical opening in the bag 10 will be created.

Fig. 4 depicts a section of a net 1 similar to that of Fig. 3 but different in that all the threads 6 forming the second mesh structure 5 have a lower tensile strength than that of the threads or bands forming the first mesh structure 4 of the main portions. In this case, the user may break any of threads 6 of the second mesh structure 5, thus giving rise to a wider opening of the net 1 than that of the net 1 in Fig. 3.

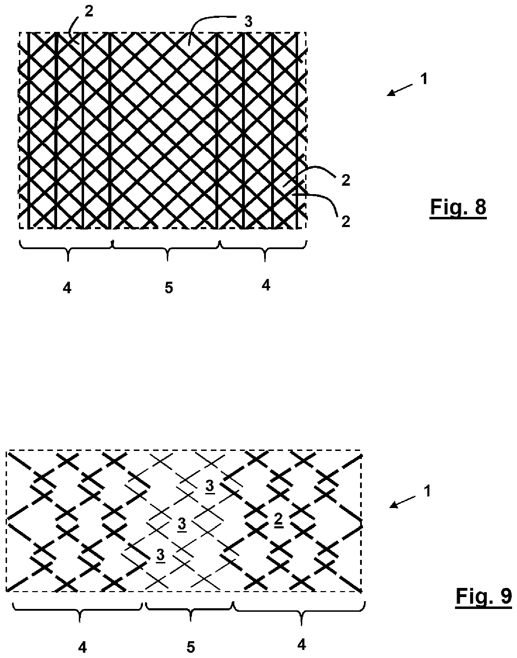

Another way of making the second mesh structure 5 more readily breakable than the first mesh structure 4 is that, while the threads or bands of the second mesh structure 5 and the first mesh structure 4 are made of the same material, at least one of the threads forming the second mesh structure may be thinner or have a smaller cross-section. This is the case of the extruded net 1 in Fig. 5 and the woven net 1 in Fig. 9. By way of guidance, the difference in thickness between the thread(s) of the second structure 5 and those of the first structure 4 is at least 30 %.

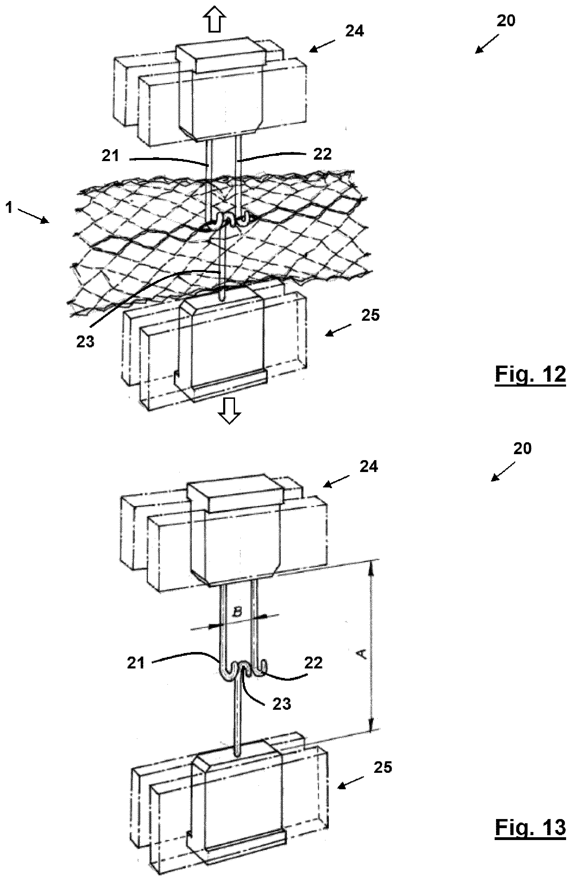

Comparative tests have been performed in order to determine the tensile strength of the main section of a net 1 in which the threads or bands form a first mesh structure 4, and the strength of a smaller section of the same net 1 in which the threads or bands form a second mesh structure, the threads or bands of the second structure 5 having a 30 % smaller section than the section of the threads of the first structure. The machine 20 used to determine the tensile strength is the one depicted in Figs. 12 and 13, consisting in an automated dynamometer for tensile tests provided with two clamps 24 and 25, one provided with two upper hooks 21 and 22 and the other with a lower hook 23 which pull one part of the net 1 upwards and one part downwards, respectively. The length of the hooks 21, 22 and 23 is 45 mm and each one is 3 mm in diameter, the distance B between the upper hooks 21 and 22 being 15 mm. The initial separation A between the clamps 24 and 25 is 90 mm. In the tests carried out, the considered preloading speed is 30 mm/min, the load is 40 gf and the stretching carried out is 160 mm/min.

Specifically, in order to perform the test of the, or of one of the, main portions, a needle or chain stitch forming part of the first mesh structure 4 is located, while for the test of one of the smaller portions, a needle or chain stitch forming part of the second mesh structure 5 is located. Once the corresponding chain stitch has been located, the upper hooks 21 and 22 are inserted into the flat (not tubular) net 1, hooking respective adjacent meshes in the same chain stitch. It may be seen in Fig. 12 that in this case, the meshes of the chain stitch of the net 1 tested had a rhombus shape (as in the net in Fig. 9), the sample tested being 20 cm long. Meanwhile, the lower hook 23 is placed so it is hooked onto the same chain stitch but at an intermediate point between the two meshes hooked by the upper hooks 21 and 22, passing through another mesh in which its lower vertex coincides with the vertex by which the other two meshes are linked. Once the hooks 21, 22, and 23 are placed as indicated, the chain stitch in question is subjected to tension (moving the upper hooks 21 and 22 upwards and the lower hook 23 downwards, in the direction of the white arrows in Fig. 12), until it breaks. This method described is the one taken into account in order to assess what herein is called the tensile strength of the meshes of a mesh structure, in which the meshes object of test belong to a chain stitch.

The tests performed, taking into account the conditions described above, resulted in a tensile strength of 4.3 kgf for meshes 2 of the main portion of the first mesh structure 4 and a tensile strength of 1.6 kgf for the meshes 3 of the smaller portion of the second mesh structure 5, in which the threads have a 30 % smaller cross-section than the threads of the first structure 4. This difference between the tensile strengths of meshes 2 and 3 is a good indicator of the fact that the smaller portion of the net 1 may be broken more easily by the user. Thus, it is confirmed that the tensile strength of a chain stitch of meshes 3 of the second mesh structure 5 is less than the tensile strength of a chain stitch of meshes 2 of the first mesh structure 4.

Other tests performed along the same lines have confirmed that in the net 1 there is at least a 30 % difference in the tensile strength in the meshes 3 of its chain stitches having the second mesh structure 5, with respect to the tensile strength in the meshes 2 of a chain stich having the first mesh structure 4, which is the reason why a smaller section (or the smaller sections, if there are more than one) of the net 1 is more easily breakable than a main section of the net 1.

In Fig. 5 it may be observed that the extruded net 1 comprises two smaller sections oriented along two straight directions intersecting with each other to form an X. The meshes 3 of the second structure 5 define the path the user may follow to rip the net 1 and break it much more easily than if the user tried to break it through the meshes 2 of the first structure 4. In turn, In Fig. 9, the woven net 1 comprises a smaller portion formed by the meshes 3 which follow a second mesh structure 5, oriented vertically.

Figs. 6 and 7 display nets 1 in which the linking or bonding between the threads or bands of the meshes 3 of the second mesh structure 5 is different than the linking or bonding of the meshes 2 of the first mesh structure 4. Specifically, it may be observed that the second mesh structure 5 has a mesh size or cell size higher than the one of the first mesh structure 4. By comparing Figs. 5 and 6, it may be observed that the greater mesh size of the second structure 5 in Fig. 6 is due to the removal of one of the threads or bands for each one of the second structures 5. In the case of Fig. 7, the difference in mesh size of the two structures 4 and 5 is due to the removal of a thread or band which extended horizontally, which has created an area, the one of the second mesh structure 5, in which the horizontal threads making up the meshes 3 are separated twice as much as the threads in the meshes 2 of the first structure 4. One of the effects of the increase in size, under the stress conditions produced by a cutting tool or similar (or the user's finger stretching along the smaller portion in order to break the net 1 through this part), is that fewer threads are dragged and bunched together than those that would be dragged in the main portion, comparatively decreasing the contact surface of the cutting tool and thus making it easier to cut through the material.

Fig. 8 displays a net in which the linking or bonding between the threads or bands of the meshes 3 of the second structure 5 is different than that of the meshes 2 of the first mesh structure 4. Specifically, it is observed that the first structure 4 has meshes 2 in the shape of triangles and rhombuses and that the second structure 5 only has meshes 3 in the shape of a rhombus. However, rhombus-shaped meshes 2 differ from rhombus-shaped meshes 3, since in meshes 2, the vertices following a horizontal direction are formed by bonding three threads, whereas in meshes 3 they are formed by bonding two threads, given the lack of vertical threads in the second structure 5, such that the latter are more easily broken.

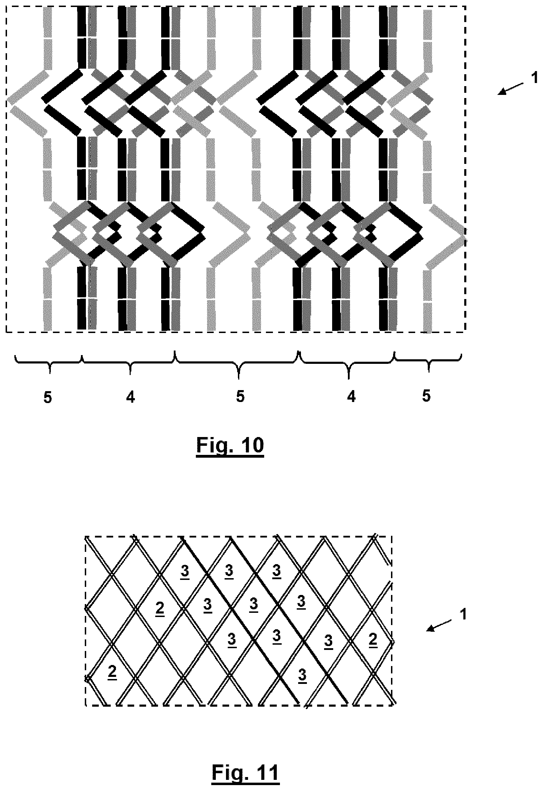

Also in the woven net 1 in Fig. 10 the meshes 3 of the linking or bonding between the threads or bands of the second mesh structure 5 is different than the linking of those of the first mesh structure 4 since only one thread is threaded through each needle instead of the two threads used for each needle forming the first structure 4.

In turn, in Fig. 11 it may be observed that the meshes 3 of the second mesh structure 5 are made up of fewer threads or bands, specifically half, than the meshes 2 of the first mesh structure 4, such that it is easier to break the net 1 following the path determined by the meshes 3.

Finally, it must be taken into account that a net 1 may have more than one smaller portion in which the threads or bands form multiple second mesh structures 5. These second mesh structures 5 may be distinguished by being more easily breakable than the first mesh structure 4. The second mesh structures 4 may be equally easy to break or one may be more easily breakable than the other, although both shall always be more easily broken than the first structures 4 of the main portions. The second mesh structures 5 within a single net may be easily breakable for different reasons, for example, one of the second structures 5 may have threads made of a different material than those of the first structures 4, while in the other second structure 5, the threads may be made of the same material as the threads of the first structures 4, but, however, may be thinner.

## Claims

1. A woven or extruded net (1) for forming bags (10), with threads or bands which are linked or firmly bonded together to make up meshes (2, 3), **characterized in that** the meshes of the net are not homogeneous, the net at least comprising one main portion wherein the threads or bands are linked or bonded to form a first mesh structure (4), suitable for the net to fulfill its role; and at least one smaller portion wherein the threads or bands form a second mesh structure (5), more readily breakable than the first mesh structure, indeed intended to make it easier to open the bag which is to be made with the net.

2. The net (1) according to claim 1, wherein at least one of the threads or bands forming the second mesh structure (5) has a lower tensile strength than that of the threads or bands forming the first mesh structure (4).

3. The net (1) according to claim 2, wherein at least one of the threads or bands forming the second mesh structure (5) is made of a different material than that of the threads or bands forming the first mesh structure (4).

4. The net (1) according to claim 1 or 2, wherein the threads or bands forming the second mesh structure (5) are made of the same material as those forming the first mesh structure (4) but at least one of the threads forming the second mesh structure is thinner or has a smaller cross-section.

5. The net (1) according to any one of the previous claims, wherein the linking or bonding between the threads or bands of the meshes (3) of the second mesh structure (5) is different than the linking or bonding of the meshes (2) of the first mesh structure (4).

6. The net (1) according to claim 5, wherein the second mesh structure (5) has a mesh size or cell size that is greater than that of the first mesh structure (4).

7. The net (1) according to any one of the previous claims, wherein the meshes (3) of the second structure (5) are made up by fewer threads or bands than the meshes (2) of the first structure (4);

8. The net (1) according to any one of the previous claims, wherein the, or each, smaller portion in which the threads or bands are linked or bonded according to the second mesh structure (5), extends out in the network in a respective direction.

9. The net (1) according to any one of the previous claims, wherein the net comprises at least two smaller portions in which the threads or bands are linked or bonded according to the second mesh structure (5).

10. The net (1) according to claim 9, wherein the two smaller portions extend out in the net in directions parallel to each other, the two smaller portions being separated by main portions whose threads or bands are linked or bonded according to the first mesh structure (4).

11. The net (1) according to any one of the previous claims, wherein the meshes (3) of the second mesh structure (5) are visually distinguishable from the meshes (2) of the first mesh structure (4).

12. The net (1) according to claim 11, wherein at least one of the threads or bands of the second mesh structure (5) has a different color than the color of the threads or bands of the first mesh structure (4),

13. The net (1) according to claim 12, wherein the meshes of the second mesh structure (5) have a different color than the meshes (2) of the first mesh structure (4).

14. The net (1) according to any one of the previous claims, wherein the tensile strength of the meshes (3) of the second mesh structure (5) is at least 20 % lower than the tensile strength of the meshes (2) of the first mesh structure (4).

15. The net (1) according to claim 14, wherein the tensile strength of the meshes (3) of the second mesh structure (5) is at least 30 % lower than the tensile strength of the meshes (2) of the first mesh structure (4).

16. The net (1) according to any one of the previous claims, wherein the net comprises at least two smaller portions wherein the threads or bands form an equal number of mesh structures (5), the two of them being more easily breakable than the first mesh structure (4) but the two smaller portions being different from each other.

17. The net (1) according to any one of the previous claims, wherein the net is a tubular net.

18. The net (1) according to any one of the claims 1 to 16, wherein the net is a flat net.

19. A use of the net (1) defined in any one of the previous claims to form a bag (10) for packing food products.

20. A bag (10) for packing food products made with a net (1) defined according to any one of the claims 1 to 18.

21. The bag (10) according to claim 20, wherein there is a distinct upper end (12) by which the bag is intended to be gripped, and an opposing lower end (13), and wherein the at least one smaller portion in which the threads or bands form a second mesh structure (5) extends longitudinally following the direction that runs from the upper end to the lower end.
